# EUROPÄISCHE PATENTSCHRIFT

(11) **EP 2 678 185 B1**
(45) Veröffentlichungstag und Bekanntmachung des Hinweises auf die Patenterteilung: **26.11.2014**
(21) Anmeldenummer: 12716320.2
(22) Anmeldetag: 11.04.2012
(51) Int. Cl.: B60L 11/18, H04L 29/12

(54) **Verfahren zum Aufbau einer IP-Basierten Kommunikationsverbindung zwischen einem Elektrofahrzeug und einer Ladesteuereinheit**
Method for establishing an IP-based communications connection between an electric vehicle and a charge control unit
Procédé pour établir une liaison de communication IP entre un véhicule électrique et une unité de commande de charge

(30) Priorität: 21.04.2011 DE 102011007912
(43) Veröffentlichungstag der Anmeldung: 01.01.2014
(73) Patentinhaber: Siemens Aktiengesellschaft, 80333 München (DE)
(72) Erfinder: HEINRICH, Andreas, 71032 Böblingen (DE); HEUER, Jörg, 82041 Oberhaching (DE)
(86) Internationale Anmeldenummer: PCT/EP2012/056502
(87) Internationale Veröffentlichungsnummer: WO 2012/143266

(56) Entgegenhaltungen:
- WO-A2-2009/098687
- GE Industrial: "EV Charging Station User Manuel & Installation Instruction", Internet Article, 1. Januar 2010 (2010-01-01), Seiten 1-86, XP002681353, Internet Gefunden im Internet: URL:http://www.geindustrial.com/publibrary /checkout/DEH-44160?TNR=Installation%20and %20Instruction|DEH-44160|generic [gefunden am 2012-07-31]
- KAÌ BISCH S ET AL: "Interconnections and Communications of Electric Vehicles and Smart Grids", SMART GRID COMMUNICATIONS (SMARTGRIDCOMM), 2010 FIRST IEEE INTERNATIONAL CONFERENCE ON, IEEE, PISCATAWAY, NJ, USA, 4. Oktober 2010 (2010-10-04), Seiten 161-166, XP031790219, ISBN: 978-1-4244-6510-1

## Beschreibung

Die Erfindung betrifft ein Verfahren zum Aufbau einer IP-basierten Kommunikationsverbindung zwischen einem Elektrofahrzeug und einer Ladesteuereinheit sowie ein entsprechendes System zum Aufbau dieser Kommunikationsverbindung. Darüber hinaus betrifft die Erfindung ein Elektrofahrzeug und eine Ladestation.

In den letzten Jahren wird verstärkt an der Entwicklung von Elektrofahrzeugen und an einer entsprechenden Infrastruktur zum Laden der Energiespeicher von Elektrofahrzeugen gearbeitet. Zum Laden bzw. gegebenenfalls auch zum Entladen eines solchen Energiespeichers ist es erforderlich, mit Hilfe eines Ladekabels eine Ladeverbindung zwischen dem Elektrofahrzeug und einer Ladestation herzustellen. Dabei ist es wünschenswert, diese Ladeverbindung zu standardisieren. Diese Verbindung soll neben der Zufuhr von Ladestrom auch eine Kommunikation zwischen Fahrzeug und Ladestation ermöglichen.

Im Rahmen des noch in der Entwicklung befindlichen Standards ISO/IEC 61851, Part 1, wird eine grundlegende Signalisierung zur Ladesteuerung zwischen Ladestation und Elektrofahrzeug basierend auf einer Pulsweitenmodulation beschrieben. Zur Signalisierung wird dabei eine sog. Pilotleitung verwendet, welche in dem Ladekabel geführt ist.

Im Rahmen der Entwicklung des weiteren Standards ISO/IEC 15118 wird neben der Kommunikationsverbindung über die Pilotleitung auch an einer Kommunikationsverbindung auf Basis der PLC-Technologie (PLC = Power Line Communication) gearbeitet. Diese Kommunikationsverbindung soll eine breitbandige Informationsübermittlung über eine nicht gesondert geschirmte Leitung und/oder stromführende Leitung im Ladekabel zwischen einem Elektrofahrzeug und einer Ladestation bzw. einer der Ladestation zugeordneten Ladesteuereinheit ermöglichen. Die Kommunikation ist dabei IP-basiert (IP = Internet Protocol) und läuft auf der L3-Schicht des OSI-Referenzmodells ab. Dabei können verschiedene Varianten von IP verwendet werden, z.B. IPv6 oder gegebenenfalls auch IPv4. Im Gegensatz zur Pilotleitung können jedoch starke Übersprecheffekte zwischen einzelnen Ladeanschlüssen entstehen, so dass unter Umständen keine eindeutige Zuordnung des Elektrofahrzeugs zur ladenden Ladestation über die PLC-Kommunikationsverbindung mehr getroffen werden kann. Die PLC-Kommunikationsverbindung zwischen Elektrofahrzeugen und Ladestationen ist somit mit einem sog. "Shared Medium" vergleichbar, über welches mehreren Elektrofahrzeuge bzw. Ladestationen Informationen übertragen können.

Obiges Problem tritt nicht nur bei der Kommunikation über eine stromführende Leitung im Ladekabel auf, sondern auch dann, wenn die PLC-Kommunikation über andere Leitungen zwischen Elektrofahrzeug und Ladestation/Ladesteuereinheit aufgebaut wird bzw. drahtlose Kommunikationsarten zum Informationsaustausch, wie z.B. WLAN, genutzt werden.

Das Dokument WO2009/098687 offenbart ein verfahren und ein System zum Aufbau einer IP-basierten Kommunikationsverbindung zwischen einem Elektrofahrzeug und einer Ladestation.

Aufgabe der Erfindung ist es deshalb, ein Verfahren zum Aufbau einer IP-basierten Kommunikationsverbindung zwischen einem Elektrofahrzeug und einer Ladesteuereinheit zu schaffen, bei dem das Elektrofahrzeug mit der zum Laden bzw. Entladen des Fahrzeugs verwendeten Ladesteuereinheit assoziiert wird.

Diese Aufgabe wird durch die unabhängigen Patentansprüche gelöst. Weiterbildungen der Erfindung sind in den abhängigen Ansprüchen definiert.

Im Rahmen des erfindungsgemäßen Verfahrens wird eine IP-basierte Kommunikationsverbindung zwischen einem Elektrofahrzeug und einer Ladesteuereinheit aufgebaut. Die Ladesteuereinheit ist dabei einer Ladestation zugeordnet, d.h. in der Ladestation existiert eine entsprechende Information, welche Ladesteuereinheit im Rahmen der Ladung/Entladung über die Ladestation für das Fahrzeug zu verwenden ist. Ferner ist der Ladesteuereinheit eine IP-Adresse zugewiesen. Die Ladesteuereinheit und die Ladestation sind dabei Teil einer Ladeinfrastruktur, welche über ein entsprechendes Backbone-Netz die Kommunikation zwischen verschiedenen Ladestationen bzw. zentralen Diensten ermöglicht und auch die Bereitstellung von Strom für die Ladestationen gewährleistet.

Zur Durchführung des erfindungsgemäßen Verfahrens ist das Elektrofahrzeug an der Ladestation über ein Ladekabel und/oder eine induktive Ladekopplung zum Laden und/oder Entladen eines Energiespeichers des Elektrofahrzeugs angeschlossen, wobei über das Ladekabel und/oder die induktive Ladekopplung eine erste, ausschließlich vom Elektrofahrzeug und der Ladestation nutzbare Kommunikationsverbindung bereitgestellt wird und wobei das Elektrofahrzeug mit der Ladesteuereinheit und der Ladeinfrastruktur über eine zweite Kommunikationsverbindung kommunizieren kann. Im Unterschied zur ersten Kommunikationsverbindung kann die zweite Kommunikationsverbindung parallel von anderen Elektrofahrzeugen und Ladesteuereinheiten genutzt werden. Es handelt sich somit um die bereits oben beschriebene Kommunikationsverbindung über ein "Shared Medium".

Im Rahmen des erfindungsgemäßen Verfahrens wird in einem Schritt a) über die erste Kommunikationsverbindung eine Identifikation dem Elektrofahrzeug und der Ladesteuereinheit bereitgestellt. Ferner wird in einem Schritt b) dem Elektrofahrzeug eine IP-Adresse zugewiesen. Schließlich wird in einem Schritt c) mit Hilfe der dem Elektrofahrzeug zugewiesenen IP-Adresse und der über die erste Kommunikationsverbindung bereitgestellten Identifikation eine IP-basierte Kommunikation zwischen dem Elektrofahrzeug und der Ladesteuereinheit über die zweite Kommunikationsverbindung eingerichtet. Zum Einrichten der IP-basierten Kommunikation können dabei an sich bekannte Mechanismen eingesetzt werden. Insbesondere wird die Kommunikation über ein TCP/TLS-Setup hergestellt.

Das erfindungsgemäße Verfahren zeichnet sich dadurch aus, dass zunächst über die erste Kommunikationsverbindung eine eindeutige Identifikation bereitgestellt wird, welche sowohl dem Elektrofahrzeug als auch der Ladesteuereinheit bekannt ist. Diese Identifikation wird anschließend zum Aufbau der IP-basierten Kommunikation genutzt. Da die erste Kommunikationsverbindung eine eindeutige Assoziation zwischen Elektrofahrzeug und Ladestation und damit auch zwischen Elektrofahrzeug und Ladesteuereinheit gewährleistet, kann durch die Verwendung dieser Identifikation beim Einrichten der IP-basierten Kommunikation sichergestellt werden, dass das Elektrofahrzeug auch mit der richtigen, im Rahmen des Ladevorgangs zu verwendenden Ladesteuereinheit assoziiert wird.

In einer bevorzugten Ausführungsform des erfindungsgemäßen Verfahren wird im Schritt b) dem Elektrofahrzeug die IP-Adresse über die zweite Kommunikationsverbindung durch die Ladeinfrastruktur zugewiesen und an das Elektrofahrzeug übermittelt.

Vorzugsweise ist die Ladesteuereinheit Teil der Ladestation. In diesem Fall kann der Begriff der Ladestation synonym zum Begriff der Ladesteuereinheit verwendet werden. Gegebenenfalls besteht jedoch auch die Möglichkeit, dass eine entfernt von der Ladestation angeordnete Ladesteuereinheit, welche beispielsweise an einem anderen Ort der Ladeinfrastruktur angeordnet ist, für die IP-basierte Kommunikationsverbindung verwendet wird. In diesem Fall wird im Rahmen des Aufbaus der ersten Kommunikationsverbindung eine andere Komponente als die für die zweite Kommunikationsverbindung genutzte Ladesteuereinheit eingesetzt. Diese Komponente ist dabei vorzugsweise in der Ladestation integriert und kann ebenfalls eine (andere) Ladesteuereinheit darstellen.

Die oben beschriebene erste Kommunikationsverbindung stellt die Identifikation vorzugsweise mittels Pulsweitenmodulation bereit, insbesondere basierend auf dem bereits oben genannten Standard ISO/IEC 61851, Teil 1. Zur Codierung der Identifikation innerhalb des PWM-Signals wird in einer besonders bevorzugten Ausführungsform die in der deutschen Patentanmeldung 10 2009 051 401.5 beschriebene Technologie verwendet. Der gesamte Offenbarungsgehalt dieser Patentanmeldung wird durch Verweis zum Inhalt der vorliegenden Anmeldung gemacht. Vorzugsweise wird dabei die Identifikation in dem PWM-Signal durch eine Amplitudenmodulation des niedrigen Pegels des Signals erreicht. Demgegenüber wird der hohe Pegel des Signals zur Übermittlung von Fahrzeugzuständen hin zur Ladestation bzw. Ladesteuereinheit verwendet.

In einer Variante des erfindungsgemäßen Verfahrens können die erste und die zweite Kommunikationsverbindung über die gleiche Leitung im Ladekabel bereitgestellt werden. Dabei kann z.B. die Leitung benutzt werden, über welche das oben beschriebene PWM-Signal übermittelt wird. Diese Leitung wird dann sowohl von der ersten Kommunikationsverbindung als auch von der zweiten Kommunikationsverbindung genutzt, wobei z.B. durch geeignete Modulation die Signale der beiden Kommunikationsverbindungen voneinander unterschieden werden können.

Die oben beschriebene zweite Kommunikationsverbindung ist vorzugsweise die bereits eingangs beschriebene PLC-Kommunikationsverbindung, wobei die PLC-Kommunikation in verschiedenen Standards, insbesondere Homeplug AV und Homeplug GP der Homeplug Alliance und ITU 9955 sowie IEEE 1902, definiert ist. Diese PLC-Kommunikation ist zur Informationsermittlung über stromführende Leitungen gedacht, kann jedoch auch über nicht stromführende Leitungen realisiert werden. Vorzugsweise wird jedoch im Rahmen der Erfindung eine PLC-Kommunikation in einer stromführenden Leitung des Ladekabels verwendet. Nichtsdestotrotz besteht gegebenenfalls auch die Möglichkeit, dass die PLC-Kommunikation über die Leitung erfolgt, über welche das oben beschriebene PWM-Signal gemäß der ersten Kommunikationsverbindung übermittelt wird.

In einer weiteren Variante des erfindungsgemäßen Verfahrens beruht die zweite Kommunikationsverbindung aus einem drahtlosen Übertragungsverfahren, wie z.B. IEEE 802.11 (WLAN) oder IEEE 802.15.4 (ZigBee).

Im Rahmen des Schritts b) des erfindungsgemäßen Verfahrens können an sich bekannte Mechanismen zum Zuweisen einer IP-Adresse an das Elektrofahrzeug verwendet werden. Insbesondere kann DHCP (DHCP = Dynamic Host Configuration Protocol) und/oder SLAAC (SLAAC = Stateless Address Auto Configuration) eingesetzt werden.

In einer besonders bevorzugten Ausführungsform des erfindungsgemäßen Verfahrens erfolgt die Bereitstellung der Identifikation in Schritt a) derart, dass die Identifikation ursprünglich im Elektrofahrzeug hinterlegt ist und von dem Elektrofahrzeug an die Ladesteuereinheit übermittelt wird. In einer bevorzugten Variante dieser Ausführungsform sendet das Elektrofahrzeug die in Schritt a) an die Ladesteuereinheit übermittelte Identifikation auch über die zweite Kommunikationsverbindung aus, woraufhin (ausschließlich) z.B. über ein Broadcast die Ladesteuereinheit, an welche die Identifikation in Schritt a) übermittelt wurde, bei Empfang der Identifikation ihre IP-Adresse an das Elektrofahrzeug übermittelt, wobei die übermittelte IP-Adresse zum Einrichten der IP-basierten Kommunikation verwendet wird. In einer weiteren Variante sendet die Ladesteuereinheit die in Schritt a) an sie übermittelte Identifikation über die zweite Kommunikationsverbindung zusammen mit ihrer IP-Adresse an das Elektrofahrzeug aus, woraufhin das Elektrofahrzeug eine Antwort an die Ladesteuereinheit übermittelt. In dieser Antwort ist insbesondere auch die IP-Adresse des Elektrofahrzeugs enthalten. Dabei wird die an das Elektrofahrzeug übermittelte IP-Adresse zum Einrichten der IP-basierten Kommunikation verwendet.

Neben der oben beschriebenen Variante des erfindungsgemäßen Verfahrens besteht auch die Möglichkeit, dass die Identifikation ursprünglich in der Ladesteuereinheit hinterlegt ist und in Schritt a) von der Ladesteuereinheit an das Elektrofahrzeug übermittelt wird. In einer besonders einfachen Realisierung dieser Variante wird in Schritt a) sogleich eine der Ladesteuereinheit zugeordnete IP-Adresse an das Elektrofahrzeug übermittelt, welche dann direkt zum Einrichten der IP-basierten Kommunikation eingesetzt wird.

In einer weiteren Variante des erfindungsgemäßen Verfahrens stellt die in Schritt a) an das Elektrofahrzeug übermittelte Identifikation keine IP-Adresse dar, sondern die entsprechende IP-Adresse muss basierend auf der übermittelten Identifikation separat ermittelt und dem Elektrofahrzeug bereitgestellt werden. In einer Variante der Erfindung erfolgt die Ermittlung der IP-Adresse derart, dass das Elektrofahrzeug die in Schritt a) übermittelte Identifikation an die Ladesteuereinheit über die zweite Kommunikationsverbindung z.B. mittels eines Broadcasts aussendet, woraufhin (ausschließlich) die Ladesteuereinheit, der diese Identifikation zugeordnet ist, aus der Identifikation die entsprechende IP-Adresse bestimmt und dem Elektrofahrzeug über die zweite Kommunikationsverbindung übermittelt. Zusätzlich oder alternativ besteht auch die Möglichkeit, dass das Elektrofahrzeug aus der in Schritt a) übermittelten Identifikation eine intermediäre Adresse ermittelt und an die Ladesteuereinheit über die zweite Kommunikationsverbindung z.B. mittels eines Broadcasts aussendet, woraufhin (ausschließlich) die Ladesteuereinheit, der die Identifikation zugeordnet ist, aus der intermediären Adresse die entsprechende IP-Adresse bestimmt und dem Elektrofahrzeug über die zweite Kommunikationsverbindung übermittelt.

In einer weiteren Abwandlung des erfindungsgemäßen Verfahrens kann auch auf die Übermittlung der Identifikation bzw. der intermediären Adresse vom Fahrzeug zur Ladesteuereinheit verzichtet werden. In diesem Fall sendet die Ladesteuereinheit unaufgefordert eine Nachricht mit der Zuordnung der Identifikation oder einer intermediären Adresse, aus der das Elektrofahrzeug die Identifikation ableiten kann, zu der entsprechenden IP-Adresse der Ladesteuereinheit über die zweite Kommunikationsverbindung aus, z.B. wiederum basierend auf einem Broadcast. Anschließend entnimmt (ausschließlich) das Elektrofahrzeug, welches zuvor die Identifikation in Schritt a) erhalten hat, die IP-Adresse aus der Nachricht und nutzt diese zum Einrichten der IP-basierten Kommunikation.

In einer weiteren Variante des erfindungsgemäßen Verfahrens übermittelt in Schritt a) nicht nur die Ladesteuereinheit die Identifikation an das Elektrofahrzeug, sondern auch das Elektrofahrzeug an die Ladesteuereinheit, wobei nach dem Aussenden der Identifikation an die Ladesteuereinheit über die zweite Kommunikationsverbindung durch das Elektrofahrzeug die Ladesteuereinheit überprüft, ob die bei ihr über die zweite Kommunikationsverbindung empfangene Identifikation mit der zuvor in Schritt a) vom Elektrofahrzeug empfangenen Identifikation übereinstimmt, wobei nur bei einer Übereinstimmung das Verfahren fortgesetzt wird. Auf diese Weise wird die Sicherheit des Verfahrens erhöht.

Die in Schritt a) des erfindungsgemäßen Verfahrens bereitgestellte Identifikation oder die intermediäre Adresse kann beliebig ausgestaltet sein. Insbesondere kann die Identifikation bzw. die intermediäre Adresse ein proprietäres Format, z.B. in der Form eines Tokens, aufweisen. Ebenso kann die Identifikation bzw. intermediäre Adresse eine MAC-Adresse (MAC = Medium Access Control) oder eine URL (URL = Uniform Resource Locator) oder ein kryptographischer Schlüssel sein.

Ist die Identifikation bzw. intermediäre Adresse eine MAC-Adresse, kann die entsprechende IP-Adresse dem Elektrofahrzeug über die zweite Kommunikationsverbindung mit an sich bekannten Mechanismen mitgeteilt werden. Insbesondere kann ein Neighbor Discovery gemäß dem Dokument RFC 4861 und/oder ein Inverse Neighbor Discovery gemäß dem Dokument RFC 3122 der IETF (IETF = Internet Engineering Task Force) verwendet werden. Diese Mechanismen sind für IPv6 definiert.

In einer weiteren Ausgestaltung des erfindungsgemäßen Verfahrens enthält die über die erste Kommunikationsverbindung bereitgestellte Identifikation ferner eine Schlüsselinformation, über welche im Rahmen der Kommunikation zwischen dem Elektrofahrzeug und der Ladesteuereinheit Daten verschlüsselt und verifiziert werden. Hierdurch kann die Sicherheit des Verfahrens gegenüber Angriffen Dritter erhöht werden.

Neben dem oben beschriebenen Verfahren umfasst die Erfindung ferner ein System zum Aufbau einer IP-basierten Kommunikationsverbindung. Das System umfasst dabei ein Elektrofahrzeug und eine Ladestation mit zugeordneter Ladesteuereinheit, wobei der Ladesteuereinheit eine IP-Adresse zugeordnet ist. Das System ist derart ausgestaltet, dass das erfindungsgemäße Verfahren bzw. eine oder mehrere Varianten des erfindungsgemäßen Verfahrens mit dem System durchführbar sind. Hierzu beinhaltet das System ein erstes Mittel, um über die oben definierte erste Kommunikationsverbindung eine Identifikation dem Elektrofahrzeug und der Ladesteuereinheit bereitzustellen. Ferner ist ein zweites Mittel vorgesehen, um dem Elektrofahrzeug eine IP-Adresse zuzuweisen. Darüber hinaus ist ein drittes Mittel vorgesehen, um mit Hilfe der mit dem Elektrofahrzeug zugewiesenen IP-Adresse und der über die erste Kommunikationsverbindung bereitgestellte Identifikation eine IP-basierte Kommunikation zwischen dem Elektrofahrzeug und der Ladesteuereinheit über die zweite Kommunikationsverbindung einzurichten.

Die Erfindung betrifft darüber hinaus ein Elektrofahrzeug zur Verwendung in einem solchen System. Das Fahrzeug umfasst dabei eine Schnittstelle für die erste Kommunikationsverbindung und eine Schnittstelle für die zweite Kommunikationsverbindung, wobei das Elektrofahrzeug über die erste und zweite Kommunikationsverbindung derart kommunizieren kann, dass eine IP-basierte Kommunikation zwischen Elektrofahrzeug und der Ladesteuereinheit über die zweite Kommunikationsverbindung eingerichtet wird.

Analog betrifft die Erfindung ferner eine Ladestation mit zugeordneter Ladesteuereinheit zur Verwendung in dem oben beschriebenen System. Dabei umfasst die Ladestation analog zum Elektrofahrzeug eine Schnittstelle für die erste Kommunikationsverbindung und eine Schnittstelle für die zweite Kommunikationsverbindung, wobei die Ladestation über die erste und zweite Kommunikationsverbindung derart kommunizieren kann, dass eine IP-basierte Kommunikation zwischen Elektrofahrzeug und der Ladesteuereinheit über die zweite Kommunikationsverbindung eingerichtet wird.

Ausführungsbeispiele der Erfindung werden nachfolgend anhand der beigefügten Figuren detailliert beschrieben.

Es zeigen:
- Fig. 1: eine schematische Darstellung des Aufbaus des Steckers eines Ladekabels zur Verbindung eines Elektrofahrzeugs mit einer Ladestation, wobei über diesen Stecker und das Ladekabel in einer Ausführungsform des erfindungsgemäßen Verfahrens die IP-basierte Kommunikationsverbindung aufgebaut wird; und
- Fig. 2 bis Fig. 5: Ablaufdiagramme, welche verschiedene Ausführungsformen des erfindungsgemäßen Verfahrens verdeutlichen.

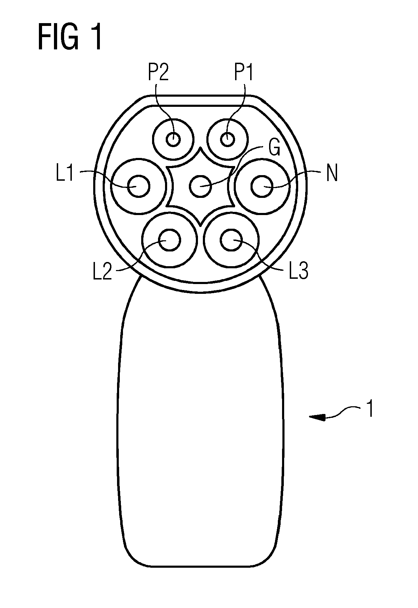

Nachfolgend wird die Erfindung basierend auf einer Verbindung zwischen einem Elektrofahrzeug und einer Ladestation über ein Ladekabel beschrieben, dessen Stecker in Fig. 1 wiedergegeben ist. Der in Draufsicht gezeigte Stecker 1 ist genormt und beinhaltet eine Mehrzahl von Anschlüssen für entsprechende Leitungen im Ladekabel. Insbesondere enthält der Stecker drei Pins für stromführende Leitungen Ll, L2 und L3 sowie einen Nulleiter-Pin N und einen Erdungs-Pin G. Über diese Pins wird ein dreiphasiger Ladestrom von der Ladestation zu einer entsprechenden Batterie des Elektrofahrzeugs geführt bzw. die Entladung der Batterie bewirkt. In der hier beschriebenen Ausführungsform wird eine der stromführenden Leitungen L1 bis L3 auch zum Datenaustausch basierend auf einer PLC-Kommunikation genutzt. Hierüber wird die zweite Kommunikationsverbindung im Sinne der Patentansprüche geschaffen. Der Stecker 1 der Fig. 1 beinhaltet ferner einen Steuerpin P1, der auch als Pilotpin bezeichnet wird, sowie einen weiteren Pin P2, durch den über einen elektrischen Widerstand erfasst wird, ob der Stecker 1 in eine entsprechende Buchse der Ladestation eingesteckt ist. Der Pin P2 kann z.B. zusammen mit dem Erdungsleiter G genutzt werden, um die Wegfahrsperre des Fahrzeugs zu aktivieren. Über den Pin P1 werden Basisinformationen übermittelt, welche im Rahmen des Ladevorgangs benötigt werden. Insbesondere wird die Information übermittelt, ob der Stecker 1 in der Ladestation eingesteckt ist, wobei diese Information über den Pin P2 ermittelt wurde. Daneben dient der Pin P1 zum Austausch von grundlegenden Informationen.

Über den Steuerpin P1 wird über eine Pilotleitung im Ladekabel die erste Kommunikationsverbindung zwischen Elektrofahrzeug und Ladestation im Sinne der Patentansprüche geschaffen. Über diese Kommunikationsverbindung werden basierend auf Pulsweitenmodulation Informationen übermittelt. Dabei werden über Spannungspegel des PWM-Signals entsprechende Fahrzeugzustände an die Ladestation übertragen. Demgegenüber überträgt die Ladestation über den Tastgrad der Pulsweitenmodulation sowie über die Modulation des Low-Levels des PWM-Signals Informationen an das Fahrzeug. Die Informationsübermittlung basierend auf Pulsweitenmodulation ist dabei an sich aus dem Stand der Technik bekannt und wird insbesondere in dem noch in der Entwicklung befindlichen Standard ISO/IEC 61851, Part 1, beschrieben. In der hier beschriebenen Ausführungsform wird über das PWM-Signal auch eine entsprechende Identifikation einer Ladesteuereinheit übermittelt. Die Übermittlung einer solchen Identifikation über das PWM-Signal ist in der bereits oben erwähnten deutschen Patentanmeldung 10 2009 051 401.5 beschrieben.

In den nachfolgend beschriebenen Ausführungsformen ist die Ladesteuereinheit, welche mit dem Elektrofahrzeug kommuniziert, in der Ladestation integriert, so dass die Kommunikation zwischen Elektrofahrzeug und Ladesteuereinheit gleichgesetzt werden kann mit einer Kommunikation zwischen Elektrofahrzeug und Ladestation. Im Folgenden werden die beiden Begriffe deshalb synonym verwendet.

Im Rahmen des Ladens des Elektrofahrzeugs wird eine Vielzahl von Informationen zwischen Elektrofahrzeug und Ladestation übertragen, welche beispielsweise zur Abrechnung des verbrauchten Ladestroms gegenüber dem Fahrzeughalter benötigt werden. Aufgrund der Menge an Informationen ist es nicht mehr möglich, diese Informationen allein über das PWM-Signal zu übertragen. Deswegen wird die bereits oben erwähnte PLC-Kommunikation über die stromführenden Leitungen L1, L2 bzw. L3 genutzt. Dabei besteht jedoch das Problem, das - im Unterschied zur Übertragung des PWM-Signals über die Pilotleitung - keine eindeutige Assoziation zwischen Elektrofahrzeug und Ladestation besteht. Insbesondere können bei der PLC-Kommunikation starke Übersprecheffekte bei der Verwendung von mehreren Kabeln an unterschiedlichen Ladeanschlüssen auftreten. Daher kann nicht davon ausgegangen werden, dass mit Hilfe einer Signalpegelanalyse zuverlässig feststellbar ist, ob die empfangenen Signale zu einer bestimmten Ladeverbindung gehören. Die Kommunikation zwischen Elektrofahrzeugen und Ladestationen ist somit mit einem "Shared-Medium" vergleichbar, welches gemeinsam von mehreren Verbindungen genutzt wird. Ein Elektrofahrzeug kann daher gegebenenfalls mehrere Ladestationen in seinem Kommunikationsumfeld über die PLC-Verbindung sehen. Analog kann gegebenenfalls auch eine Ladestation mehrere Elektrofahrzeuge in seinem Kommunikationsumfeld sehen.

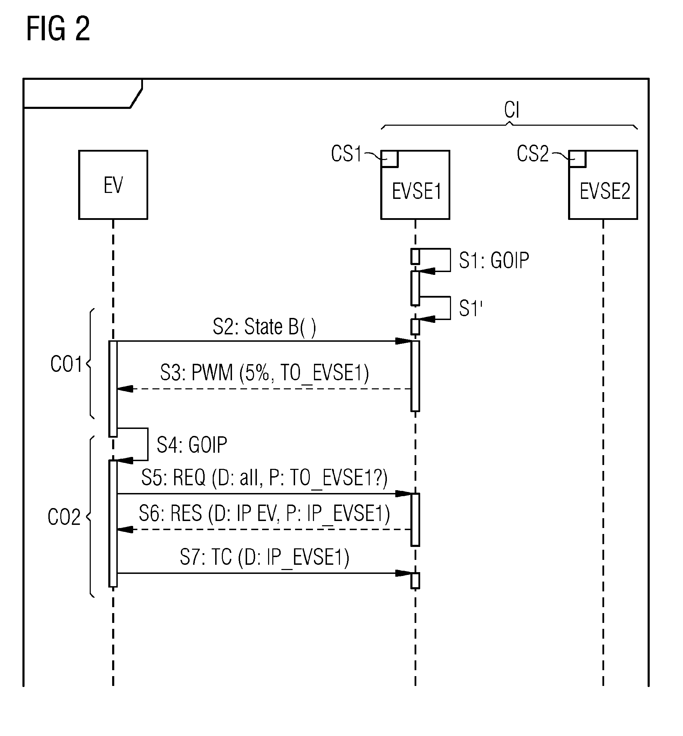

Fig. 2 bis Fig. 5 zeigen verschiedene Varianten des erfindungsgemäßen Verfahrens, mit dem sichergestellt wird, dass auch über die PLC-Kommunikation eine eindeutig zuweisbare Ende-zu-Ende-Verbindung zum Datenaustausch zwischen Elektrofahrzeug und Ladestation hergestellt werden kann.

In Fig. 2 bis Fig. 5 wird mit dem Bezugszeichen EV ein Elektrofahrzeug bezeichnet, das über ein Ladekabel mit dem Stecker gemäß Fig. 1 an einer Ladestation EVSE1 (EVSE = Electric Vehicle Supply Equipment, auch als Ladesäule bezeichnet) angeschlossen ist. Die Ladestation EVSE1 beinhaltet dabei eine Ladesteuereinheit CS1 (CS = Charging Service), mit der der Ladevorgang gesteuert und überwacht wird. Insbesondere umfasst die Ladesteuereinheit einen Stromverbrauchszähler zum Erfassen des beim Ladevorgang entnommenen Stroms. Da in den nachfolgenden Ausführungsformen die Ladesteuereinheit in der Ladestation integriert ist, werden die Begrifflichkeiten der Ladestation und Ladesteuereinheit synonym verwendet. Gegebenenfalls ist es jedoch auch möglich, dass die Ladesteuereinheit, mit der die Ladung des Elektrofahrzeugs überwacht wird, entfernt von der Ladestation angeordnet ist bzw. alternativ zu der Ladesteuereinheit CS1 eine andere Ladesteuereinheit zur Ladung genutzt wird. Dabei wird über eine mit CI bezeichnete Ladeinfrastruktur sichergestellt, dass auch entfernt von der Ladestation EVSE1 angeordnete Ladesteuereinheiten mit der Ladestation und über die Ladeverbindung mit dem Elektrofahrzeug EV kommunizieren können.

In Fig. 2 ist neben der Ladestation EVSE1 auch noch eine weitere Ladestation EVSE2 mit zugeordneter Ladesteuereinheit CS2 gezeigt, welche im Rahmen der Beschreibung des Verfahrens jedoch nicht zur Kommunikation genutzt wird. Durch die weitere Ladestation wird verdeutlicht, dass die Ladestationen Teil einer größeren Infrastruktur CI aus einer Vielzahl von Ladestationen sind. Die Ladestation EVSE2 kann dabei beispielsweise benachbart zur Ladestation EVSE1 in einem öffentlichen Bereich, wie z.B. einem Parkhaus, angeordnet sein.

Die Ladeinfrastruktur CI bildet insgesamt ein Kommunikationsnetz und umfasst auch noch weitere Kommunikationskomponenten, welche nicht in den nachfolgenden Figuren gezeigt sind. Das Kommunikationsnetz ist dabei IP-basiert und als weitere Komponenten sind in dem Kommunikationsnetz entsprechende Server, insbesondere ein DHCP-Server und ein DNS-Server, vorgesehen, welche im Rahmen der IP-basierten Kommunikation genutzt werden. In den Ausführungsformen der Fig. 2 bis Fig. 5 wird die erste, über die Pilotleitung des Ladekabels eingerichtete Kommunikationsverbindung mit CO1 bezeichnet. Demgegenüber wird die PLC-Kommunikation auf einer stromführenden Leitung im Ladekabel mit CO2 bezeichnet.

Wie bereits erwähnt, ist die zweite Kommunikationsverbindung CO2 aufgrund von Übersprecheffekten nicht immer eindeutig dem Elektrofahrzeug und der daran angeschlossenen Ladestation bzw. Ladesäule zuordenbar. Sind beispielsweise die beiden Ladestationen EVSE1 und EVSE2 benachbart zueinander angeordnet und sind an beiden Ladestationen Elektrofahrzeuge angeschlossen, so kann ohne eindeutige Assoziation zwischen Elektrofahrzeug und Ladestation der Fall auftreten, dass einem Elektrofahrzeug eine Ladestation zugeordnet wird, an der das andere Elektrofahrzeug angeordnet ist, so dass dem Fahrzeug der falsche Stromzähler zugeordnet wird und somit die Stromabrechnung für den Fahrzeughalter nicht mehr korrekt erfolgt. Derartige Situationen werden durch die nachfolgend beschriebenen Ausführungsformen des erfindungsgemäßen Verfahrens vermieden.

In allen nachfolgenden Ausführungsformen wird durch die Bezeichnung "GOIP" ein Mechanismus zum Bezug einer IP-Adresse bezeichnet, wobei in der hier beschriebenen Ausführungsform auf an sich bekannte Mechanismen zurückgegriffen wird. Insbesondere erfolgt der Bezug der IP-Adresse über DHCP (DHCP = Dynamic Host Configuration Protocol). Dabei kommuniziert die Einheit, welche eine IP-Adresse erhalten möchte, mit einem (nicht gezeigten) DHCP-Server in der Infrastruktur CI. Über an sich bekannte Kommandos in der Form von DHCP-Discover, DHCP-Offer, DHCP-Request und DHCP-Ack wird dann die entsprechende IP-Adresse zugewiesen. Hierbei wird auf der entsprechenden Komponente, welche eine Adresse beziehen möchte, ein DHCP-Client gestartet, und über ein Relay kommuniziert dieser Client mit dem entsprechenden DHCP-Server. Darüber hinaus wird in den nachfolgenden Figuren das Einrichten einer IP-basierten Kommunikation zwischen dem Elektrofahrzeug EV und der Ladestation EVSE1 mit TC (TC = TCP Connect) bezeichnet. Dabei handelt es sich um den an sich bekannten TCP/TLS-Setup, mit dem im Unicast-Verfahren das Elektrofahrzeug EV eine IP-Kommunikation zur Ladestation EVSE1 aufbaut.

In den nachfolgenden Abbildungen bezeichnet ferner das Bezugszeichen "D" das Ziel einer Nachricht und das Bezugszeichen "P" die Nutzlast. Ferner wird durch ein Fragezeichen hinter der entsprechenden Identifikation angedeutet, dass diese Identifikation angefragt wird. Durch die Bezeichnung "all" wird wiedergegeben, dass die Nachricht eine Broadcast-Nachricht ohne spezifischen Empfänger ist. Ist dieser Zusatz nicht vorhanden, handelt es sich um eine Unicast-Nachricht, mit der ein bestimmter Empfänger angesprochen wird.

In der Variante der Fig. 2 wird in Schritt S1 zunächst der Ladestation EVSE1 eine entsprechende IP-Adresse zugewiesen. Anschließend wird in Schritt S1' ein geeigneter Server gestartet, über den es ermöglicht wird, die IP-Adresse der Ladestation EVSE1 dem Elektrofahrzeug mitzuteilen. Hierzu werden die weiter unten beschriebenen Nachrichten REQ und RES verwendet. Im Rahmen der Ausführungsform der Fig. 2 teilt das Elektrofahrzeug EV zunächst in Schritt S2 seinen Zustand der Ladestation über die erste Kommunikationsverbindung mit. In Fig. 2 und auch den nachfolgenden Figuren wird dabei als Zustand der sog. "State B" übermittelt, der aus dem oben erwähnten ISO/IEC-Standard 61851, Part 1, bekannt ist. Durch diesen Zustand wird angezeigt, dass das Fahrzeug zum Laden bereit ist. Anschließend wird von der Ladestation in Schritt S3 ein PWM-Signal mit einem Tastgrad von z.B. 5% übermittelt, über das angezeigt wird, dass ferner eine zweite breitbandige Kommunikationsverbindung über PLC zwischen Fahrzeug und Ladestation einzurichten ist. Im PWM-Signal ist dabei ferner eine Identifikation der Ladestation in der Form eines Tokens codiert, welcher mit TO_EVSE1 bezeichnet ist. Die Identifikation ist in der Ausführungsform der Fig. 2 an keinen vorgegebenen Standard gebunden. Es muss lediglich sichergestellt sein, dass die Identifikation eindeutig der Ladestation EVSE1 zugeordnet ist. Anschließend erfolgt eine Kommunikation über die zweite PLC-Kommunikationsverbindung CO2. Dabei wird über diese Kommunikationsverbindung der Datenaustausch mit der Infrastruktur CI ermöglicht. In Schritt S4 wird zunächst in Analogie zu Schritt S1 eine IP-Adresse bezogen, welche dem Fahrzeug EV zugewiesen wird.

Im nachfolgenden Schritt S5 wird eine Anfrage REQ über Broadcast an die Infrastruktur CI gerichtet. Die Anfrage beinhaltet als Quelladresse die in Schritt S4 zugewiesene IP-Adresse, welche nachfolgend mit IP_EV bezeichnet ist. Mit dieser Anfrage wird nach derjenigen Ladestation gesucht, welcher der Token TO_EVSE1 zugeordnet ist. Die Anfrage gelangt zu einer Vielzahl von Ladestationen in der Ladeinfrastruktur CI, jedoch antwortet nur diejenige Ladestation auf die Anfrage, welche der Token TO_EVSE1 zugeordnet ist. Dies ist gemäß Fig. 2 die Ladestation EVSE1. Die Ladestation EVSE1 antwortet dann in Schritt S6 mit der Response RES, welche eine Unicast-Nachricht mit der Zieladresse IP_EV ist. Als Nutzlast bzw. Payload beinhaltet die Nachricht die IP-Adresse IP_EVSE1 der Ladestation. Basierend auf den Schritten S5 und S6 wird somit über einen Anfrage-Antwort-Mechanismus gewährleistet, dass das Elektrofahrzeug EV zu der ursprünglich übermittelten Identifikation TO_EVSE1 die zugehörige IP-Adresse der Ladestation empfängt. Basierend auf der Kenntnis dieser IP-Adresse kann dann in Schritt S7 in an sich bekannter Weise über einen TCP/TLS-Setup mit der Zieladresse IP_EVSE1 der Ladestation eine IP-basierte Kommunikation eingerichtet werden. Dabei ist aufgrund der Übermittlung des Tokens in Schritt S3 sichergestellt, dass die Assoziation zwischen dem Elektrofahrzeug und derjenigen Ladestation stattfindet, an der das Elektrofahrzeug über das Ladekabel angeschlossen ist.

Die soeben beschriebene Ausführungsform der Fig. 2 kann derart abgewandelt werden, dass im Rahmen der ersten Kommunikationsverbindung CO1 in einem Schritt S3', der auf den Schritt S3 folgt, auch die Identifikation TO_EVSE1 von dem Elektrofahrzeug zu der Ladestation EVSE1 übermittelt wird. Es wird somit eine bidirektionale Kommunikation zwischen Elektrofahrzeug und Ladestation im Rahmen der ersten Kommunikationsverbindung realisiert. Schließlich wird in einem späteren Schritt S5', der auf den Schritt S5 folgt, von der Ladestation EVSE1 überprüft, ob die zuvor im Schritt S5 übermittelte Identifikation TO_EVSE1 mit der im Rahmen der ersten Kommunikationsverbindung im Schritt S3' übermittelten Identifikation übereinstimmt. Nur wenn dies der Fall ist, wird das Verfahren fortgesetzt und ansonsten wird ein Angriff erkannt. Diese Ausgestaltung der Erfindung ist vorteilhaft, da das PWM-Signal typischerweise abgehört, jedoch nicht von außen manipuliert werden kann. Durch die vom Fahrzeug im Rahmen des Schritts S3' übermittelte bzw. zurückgeschickte Identifikation kann die Ladesteuereinheit sicherstellen, dass nicht ein Fahrzeug antwortet, das die Identifikation im Schritt S3 nur mitgelesen hat, sondern nur dasjenige Fahrzeug antwortet, das am Ladekabel angeschlossen ist und das PWM-Signal beeinflussen kann.

Die im vorangegangen beschriebene Variante der Fig. 2 kann auch derart abgewandelt werden, dass im Schritt S3 eine Übertragung einer entsprechenden Identifikation nicht von der Ladestation hin zum Elektrofahrzeug, sondern vom Elektrofahrzeug hinzu der Ladestation erfolgt. Dabei können die nachfolgenden Schritte wiederum analog durchgeführt werden, denn die Identifikation TO_EVSE1 ist dem Elektrofahrzeug bekannt. Gegebenfalls können die Schritte S5 und S6 jedoch auch in ihrer Richtung umgekehrt werden. D.h., im Rahmen des Schritts S5 sendet die Ladestation EVSE1 eine Anfrage nach der Identifikation TO_EVSE1 an das Elektrofahrzeug EV. Diese Anfrage beinhaltet dabei ferner auch die IP-Adresse der Ladestation. Nur das Elektrofahrzeug, welches bei sich die Identifikation TO_EVSE1 enthält, antwortet dann in Schritt S6 mit einer entsprechenden Response, mit der es seine IP-Adresse an die Ladestation EVSE1 übermittelt. Schritt S7 erfolgt dann analog wie in Fig. 2 gezeigt. Der oben beschriebene Token TO_EVSE1 kann gegebenenfalls auch ein öffentlicher Schlüssel eines asymmetrischen Verschlüsselungsverfahren sein, wobei beim Übermitteln des Schlüssels im Schritt S5 die Anfrage mit dem privaten Schlüssel signiert ist.

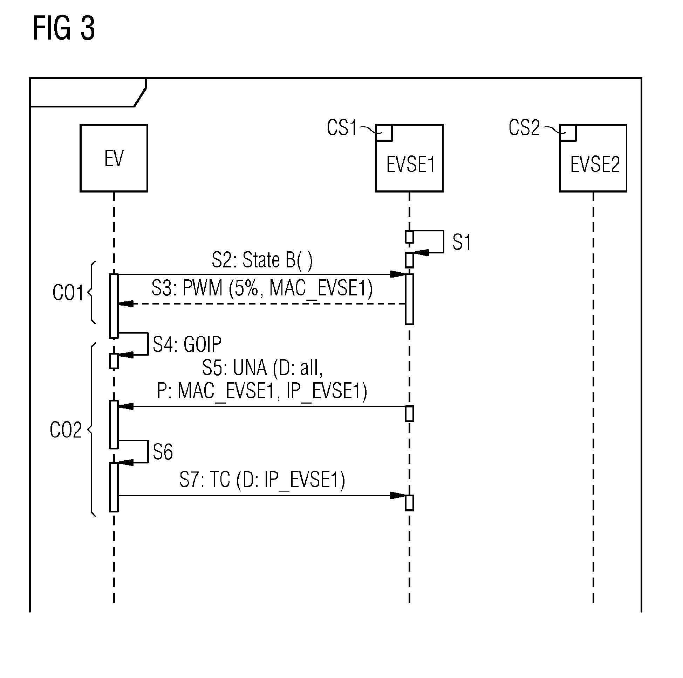

Fig. 3 zeigt eine Abwandlung des Verfahrens der Fig. 1. Dabei entsprechen die Schritte S1 bis S4 im Wesentlichen den Verfahrensschritten der Fig. 2. Im Unterschied zu Schritt S3 der Fig. 2 wird nunmehr jedoch durch das PWM-Signal nicht mehr ein Token übermittelt, sondern die MAC-Adresse MAC_EVSE1 der Ladestation EVSE1. Dies ermöglicht es, dass Standard-Mechanismen verwendet werden können, über welche dem Fahrzeug die IP-Adresse der Ladestation EVSE1 mitgeteilt wird. In der Ausführungsform der Fig. 3 erfolgt die Übermittlung dieser IP-Adresse im Rahmen eines sog. "Unsolicited Neighbor Advertisements". Dabei wird eine Kommunikation basierend auf IPv6 eingerichtet und eine Nachbarschaftserkennung basierend auf dem Dokument RFC4861 der IETF durchgeführt. Gemäß Fig. 3 wird in Schritt S5 die oben genannte Unsolicited Neighbor Advertisement, welche mit UNA bezeichnet ist, als Broadcast von der Ladestation EVSE1 ausgesendet. Dieses Advertisement erhält als Nutzlast sowohl die MAC-Adresse MAC_EVSE1 als auch die dieser MAC-Adresse zugeordnete IP-Adresse IP_EVSE1 der Ladestation. Das Neighbor Advertisement wird über die zweite Kommunikationsverbindung von dem Elektrofahrzeug EV empfangen und in Schritt S6 ausgewertet. Dabei stellt das Elektrofahrzeug fest, dass die ihm zuvor in Schritt S3 übermittelte MAC-Adresse mit der MAC-Adresse des Unsolicited Neighbor Advertisements UNA übereinstimmt. Hieraus erkennt das Elektrofahrzeug, dass die über das Ladekabel an ihm angeschlossene Ladestation die IP-Adresse IP EVSE1 aufweist. Anschließend wird analog zu Fig. 2 in Schritt S7 über Unicast die IP-basierte Kommunikation mittels TCP/TLS-Setup eingerichtet.

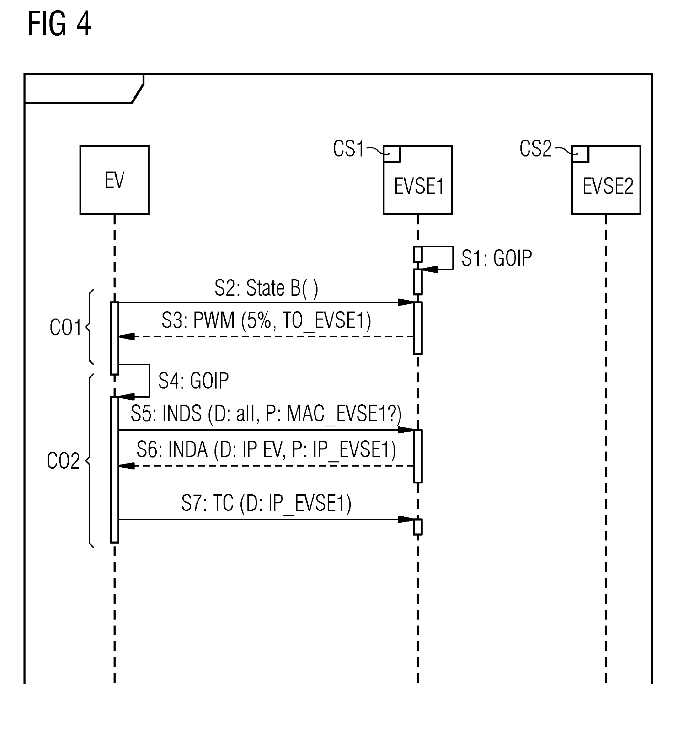

Fig. 4 zeigt eine Abwandlung des Verfahrens der Fig. 3. Dabei wird analog zu Fig. 3 in Schritt S3 wiederum die MAC-Adresse der Ladestation EVSE1 an das Elektrofahrzeug EV übermittelt. Um die zugehörige IP-Adresse IP_EVSE1 dem Fahrzeug mitzuteilen, wird nunmehr die auf IPv6 basierende Inverse Neighbor Discovery verwendet, welche in dem Dokument RFC3122 der IETF definiert ist. Dabei sendet das Fahrzeug EV in Schritt S5 zunächst eine IND-Solicitation INDS (IND = Inverse Neighbor Discovery) über Broadcast an die Infrastruktur CI, wobei basierend auf dieser Nachricht nach der Ladestation mit der zuvor in Schritt S3 übermittelten MAC-Adresse MAC_EVSE1 gesucht wird. Die Ladestation EVSE1, der diese MAC-Adresse zugeordnet ist, antwortet dann in Schritt S6 mit der Nachricht INDA, welche ein IND-Advertisement darstellt. Diese Nachricht ist eine Unicast-Nachricht, die an die IP-Adresse IP_EV des Elektrofahrzeugs EV gerichtet ist und als Payload die IP-Adresse IP_EVSE1 der Ladestation EVSE1 enthält. Über Schritt S6 erhält somit das Elektrofahrzeug EV die IP-Adresse der Ladestation und kann anschließend in Schritt S7 über das TCP/TLS-Setup die IP-basierte Kommunikation einrichten.

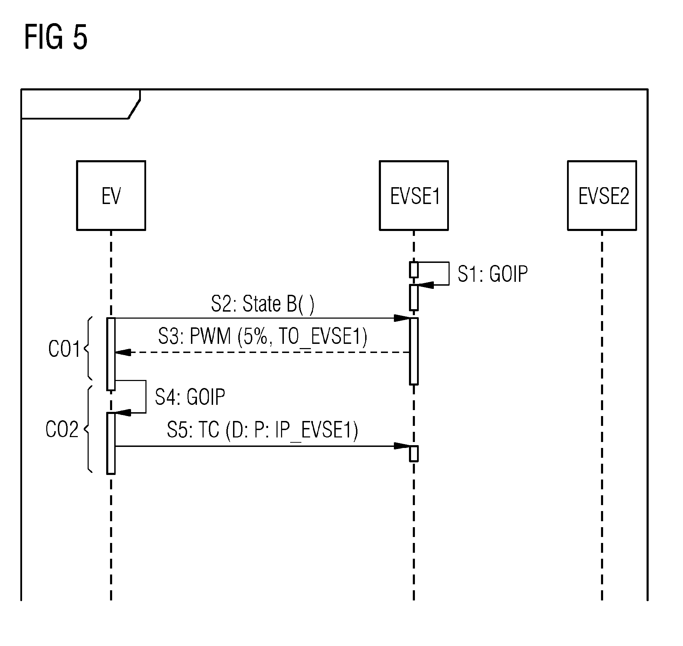

Fig. 5 zeigt eine weitere Ausführungsform des erfindungsgemäßen Verfahrens, welche gegenüber den vorangehenden Ausführungsformen der Fig. 2 bis Fig. 4 vereinfacht ist. Die Schritte S1 bis S4 entsprechen dabei den Schritten S1 bis S4 der vorangegangenen Figuren mit dem einzigen Unterschied, dass in Schritt S3 nunmehr direkt die IP-Adresse IP_EVSE1 der Ladestation EVSE1 übermittelt wird. Es ist somit nicht mehr erforderlich, dass eine zusätzliche Nachrichtenübermittlung implementiert werden muss, über welche ein Token bzw. eine MAC-Adresse der IP-Adresse der Ladestation EVSE1 zugeordnet wird. Vielmehr kann nach der Zuweisung einer IP-Adresse an das Elektrofahrzeug EV gemäß Schritt S4 sofort die IP-basierte Kommunikation in Schritt S5 über ein TCP/TLS-Setup eingerichtet werden.

Die im Vorangegangenen beschriebenen Ausführungsformen des erfindungsgemäßen Verfahrens weisen eine Reihe von Vorteilen auf. Insbesondere können parallel mehrere Elektrofahrzeuge bzw. Ladestationen über eine PLC-Kommunikation trotz Übersprechens eine IP-Verbindung einrichten. Dies wird dadurch gewährleistet, dass über die erste Kommunikationsverbindung, gemäß der eine eindeutige Assoziation zwischen Fahrzeug und angeschlossener Ladestation sichergestellt ist, eine Identifikation der Ladestation übermittelt wird, aus welcher die IP-Adresse der Ladestation ableitbar ist. Das Verfahren ermöglicht dabei die Parallelisierung von mehreren Verbindungsaufbau-Anforderungen verschiedener Elektrofahrzeuge bzw. Ladestationen. Insbesondere können Sequenzen mehrerer Verbindungsaufbau-Anforderungen ineinander verschachtelt werden. Ferner kann im erfindungsgemäßen Verfahren auf Standardmechanismen zur Adresszuweisung, insbesondere DHCP und gegebenenfalls auch SLAAC, sowie auf weitere bekannte Mechanismen, wie die oben beschriebene Neighbor Discovery bzw. Inverse Neighbor Discovery, zurückgegriffen werden.

In Abwandlungen des oben beschriebenen Verfahrens kann als Identifikation innerhalb des PWM-Signals auch z.B. eine URL übermittelt werden. Die Verwendung einer URL bietet mehr Flexibilität. So kann beispielsweise die Ladestation eine andere IP-Adresse bekommen, ohne dass sich die URL ändert. Über einen Standard-DNS-Service (DNS = Domain Name System) kann die URL auf die entsprechende IP-Adresse abgebildet werden. Die Adresse des DNS-Service sowie das benötigte Gateway können wiederum über DHCP mitgeteilt werden.

In einer weiteren Variante besteht auch die Möglichkeit, dass im Elektrofahrzeug aus der Identifikation die entsprechende URL, z.B. über eine geeignete Funktion, abgeleitet wird. In gleicher Weise kann im Fahrzeug auch direkt aus einer solchen Identifikation die IP-Adresse bestimmt werden. In einer weiteren Variante kann die Identifikation auch Schlüsselinformationen enthalten. Das Elektrofahrzeug kann diese Schlüsselinformationen dann dazu nutzen, um entweder die signierten Daten von der Ladestation zu verifizieren oder Daten zu verschlüsseln, die nur diejenige Ladestation decodieren kann, welche zuvor die Identifikation gesendet hat. Damit werden Angriffe auf die Kommunikation zwischen Elektrofahrzeug und Ladestation erschwert. Beispielsweise könnte die Ladestation einen öffentlichen PGP-Schlüssel senden, den das Elektrofahrzeug bei der Kommunikation für die Verifizierung der Signatur oder zur Verschlüsselung nutzt. Die Ladestation kann dann die Information mit ihrem privaten Schlüssel decodieren. Zusätzliche Sicherheit kann dadurch erreicht werden, dass ein entsprechendes Schlüsselpaar lediglich für einen Ladevorgang oder Verbindungsaufbau erst kurz vor dem betreffenden Verbindungsaufbau generiert wird.

## Patentansprüche

1. Verfahren zum Aufbau einer IP-basierten Kommunikationsverbindung zwischen einem Elektrofahrzeug (EV) und einer Ladesteuereinheit (CS1), die einer Ladestation (EVSE1) zugeordnet ist und welcher einer IP-Adresse (IP_EVSE1) zugewiesen ist, wobei die Ladesteuereinheit (CS1) und die Ladestation (EVSE1) Teil einer Ladeinfrastruktur (CI) sind und an der Ladestation (EVSE1) das Elektrofahrzeug (EV) über ein Ladekabel und/oder eine induktive Ladekopplung zum Laden und/oder Entladen eines Energiespeichers des Elektrofahrzeugs (EV) angeschlossen ist, wobei über das Ladekabel und/oder die induktive Ladekopplung eine erste, ausschließlich vom Elektrofahrzeug (EV) und der Ladestation (EVSE1) nutzbare Kommunikationsverbindung (CO1) bereitgestellt wird und wobei das Elektrofahrzeug (EV) mit der Ladesteuereinheit (CS1) und der Ladeinfrastruktur (CI) über eine zweite Kommunikationsverbindung (CO2) kommunizieren kann, welche parallel von anderen Elektrofahrzeugen und Ladesteuereinheiten (CS2) nutzbar ist, bei dem:
a) über die erste Kommunikationsverbindung (CO1) eine Identifikation (TO_EVSE1, MAC_EVSE1, IP_EVSE1) dem Elektrofahrzeug (EV) und der Ladesteuereinheit (CS1) bereitgestellt wird;
b) dem Elektrofahrzeug (EV) eine IP-Adresse (IP_EV) zugewiesen wird;
c) mit Hilfe der dem Elektrofahrzeug (EV) zugewiesenen IP-Adresse (IP_EV) und der über die erste Kommunikationsverbindung (CO1) bereitgestellten Identifikation (TO_EVSE1, MAC_EVSE1, IP_EVSE1) eine IP-basierte Kommunikation zwischen dem Elektrofahrzeug (EV) und der Ladesteuereinheit (CS1) über die zweite Kommunikationsverbindung (CO2) eingerichtet wird.

2. Verfahren nach Anspruch 1, bei dem im Schritt b) dem Elektrofahrzeug (EV) die IP-Adresse (IP_EV) über die zweite Kommunikationsverbindung durch die Ladeinfrastruktur (CI) zugewiesen und an das Elektrofahrzeug (EV) übermittelt wird.

3. Verfahren nach Anspruch 1 oder 2, bei dem die Ladesteuereinheit (CS1) in der Ladestation (EVSE1) integriert ist.

4. Verfahren nach einem der vorhergehenden Ansprüche, bei dem die Identifikation (TO_EVSE1, MAC_EVSE1, IP_EVSE1) über die erste Kommunikationsverbindung (CO1) basierend auf einem pulsweitenmodulierten Signal bereitgestellt wird.

5. Verfahren nach einem der vorhergehenden Ansprüche, bei dem die erste und die zweite Kommunikationsverbindung (CO1, CO2) über die gleiche Leitung im Ladekabel bereitgestellt wird.

6. Verfahren nach einem der vorhergehenden Ansprüche, bei dem die zweite Kommunikationsverbindung (CO2) eine PLC-Kommunikationsverbindung und insbesondere eine PLC-Kommunikationsverbindung in einer stromführenden Leitung des Ladekabels oder in einer Leitung im Ladekabel ist, über welche basierend auf einem pulsweitenmodulierten Signal die Identifikation (TO_EVSE1, MAC_EVSE1, IP_EVSE1) über die erste Kommunikationsverbindung (CO1) übermittelt werden.

7. Verfahren nach einem der vorhergehenden Ansprüche, bei dem in Schritt b) die IP-Adresse (IP EV) über DHCP und/oder SLAAC dem Elektrofahrzeug (EV) zugewiesen wird.

8. Verfahren nach einem der vorhergehenden Ansprüche, bei dem in Schritt a) die Identifikation (TO_EVSE1, MAC_EVSE1, IP_EVSE1) von dem Elektrofahrzeug (EV) an die Ladesteuereinheit (CS1) übermittelt wird.

9. Verfahren nach Anspruch 8, bei dem das Elektrofahrzeug (EV) die in Schritt a) an die Ladesteuereinheit (CS1) übermittelte Identifikation (TO_EVSE1, MAC_EVSE1, IP_EVSE1) auch über die zweite Kommunikationsverbindung (CO2) aussendet, woraufhin die Ladesteuereinheit (CS1) bei Empfang der Identifikation (TO_EVSE1, MAC_EVSE1, IP_EVSE1) ihre IP-Adresse (IP_EVSE1) an das Elektrofahrzeug (EV) übermittelt, wobei die übermittelte IP-Adresse (IP_EVSE1) zum Einrichten der IP-basierten Kommunikation verwendet wird.

10. Verfahren nach Anspruch 8 oder 9, bei dem die Ladesteuereinheit (CS1) die in Schritt a) an sie übermittelte Identifikation (TO_EVSE1, MAC_EVSE1, IP_EVSE1) über die zweite Kommunikationsverbindung (CO2) zusammen mit ihrer IP-Adresse (IP_EVSE1) an das Elektrofahrzeug (EV) aussendet, woraufhin das Elektrofahrzeug (EV) eine Antwort an die Ladesteuereinheit (CS1) übermittelt, wobei die an das Elektrofahrzeug (EV) übermittelte IP-Adresse (IP_EVSE1) zum Einrichten der IP-basierten Kommunikation verwendet wird.

11. Verfahren nach einem der vorhergehenden Ansprüche, bei dem in Schritt a) die Identifikation (TO_EVSE1, MAC_EVSE1, IP_EVSE1) von der Ladesteuereinheit (CS1) an das Elektrofahrzeug (EV) übermittelt wird.

12. Verfahren nach Anspruch 11, bei dem die in Schritt a) an das Elektrofahrzeug (EV) übermittelte Identifikation (TO_EVSE1, MAC_EVSE1, IP_EVSE1) eine IP-Adresse (IP EVSE) der Ladesteuereinheit (CS1) ist, welche zum Einrichten der IP-basierten Kommunikation verwendet wird.

13. Verfahren nach Anspruch 11 oder 12, bei dem basierend auf der in Schritt a) an das Elektrofahrzeug (EV) übermittelten Identifikation (TO_EVSE1, MAC_EVSE1, IP_EVSE1) eine entsprechende IP-Adresse (IP_EVSE1) der Ladesteuereinheit (CS1) ermittelt wird und dem Elektrofahrzeug (EV) bereitgestellt wird, wobei die bereitgestellte IP-Adresse (IP_EVSE1) zum Einrichten der IP-basierten Kommunikation verwendet wird.

14. Verfahren nach Anspruch 13, bei dem das Elektrofahrzeug (EV) die in Schritt a) an das Elektrofahrzeug (EV) übermittelte Identifikation (TO_EVSE1, MAC_EVSE1, IP_EVSE1) an die Ladesteuereinheit (CS1) über die zweite Kommunikationsverbindung (CO2) aussendet, woraufhin die Ladesteuereinheit (CS1) aus der Identifikation (TO_EVSE1, MAC_EVSE1, IP_EVSE1) die entsprechende IP-Adresse (IP_EVSE1) bestimmt und dem Elektrofahrzeug (EV) über die zweite Kommunikationsverbindung (CO2) übermittelt.

15. Verfahren nach Anspruch 13 oder 14, bei dem das Elektrofahrzeug (EV) aus der in Schritt a) an das Elektrofahrzeug (EV) übermittelten Identifikation (TO_EVSE1, MAC_EVSE1, IP_EVSE1) eine intermediäre Adresse ermittelt und an die Ladesteuereinheit (CS1) über die zweite Kommunikationsverbindung (CO2) aussendet, woraufhin die Ladesteuereinheit (CS1) aus der intermediären Adresse die entsprechende IP-Adresse (IP_EVSE1) bestimmt und dem Elektrofahrzeug (EV) über die zweite Kommunikationsverbindung (CO2) übermittelt.

16. Verfahren nach einem der Ansprüche 13 bis 15, bei dem die Ladesteuereinheit (CS1) unaufgefordert eine Nachricht mit der Zuordnung der Identifikation (TO_EVSE1, MAC_EVSE1, IP_EVSE1) oder einer intermediären Adresse, aus der das Elektrofahrzeug (EV) die Identifikation (TO_EVSE1, MAC_EVSE1, IP_EVSE1) ableiten kann, zu der entsprechenden IP-Adresse (IP_EVSE1) der Ladesteuereinheit (CS1) über die zweite Kommunikationsverbindung (CO2) aussendet, woraufhin das Elektrofahrzeug (EV) die IP-Adresse (IP-EVSE) aus der Nachricht entnimmt.

17. Verfahren nach einem der vorhergehenden Ansprüche, wenn abhängig von Anspruch 14, bei dem in Schritt a) auch das Elektrofahrzeug (EV) die Identifikation (TO_EVSE1, MAC_EVSE1, IP_EVSE1) an die Ladesteuereinheit (CS1) übermittelt, wobei nach dem Aussenden der Identifikation (TO_EVSE1, MAC_EVSE1, IP_EVSE1) an die Ladesteuereinheit (CS1) über die zweite Kommunikationsverbindung (CO2) durch das Elektrofahrzeug die Ladesteuereinheit (CS1) überprüft, ob die bei ihr über die zweite Kommunikationsverbindung (CO2) empfangene Identifikation (TO_EVSE1, MAC_EVSE1, IP_EVSE1) mit der zuvor in Schritt a) vom Elektrofahrzeug (EV) empfangene Identifikation (TO_EVSE1, MAC_EVSE1, IP_EVSE1) übereinstimmt, wobei nur bei einer Übereinstimmung das Verfahren fortgesetzt wird.

18. Verfahren nach einem der vorhergehenden Ansprüche, bei dem die in Schritt a) bereitgestellte Identifikation (TO_EVSE1, MAC_EVSE1, IP_EVSE1) oder die intermediäre Adresse ein Token oder eine URL oder ein kyptographischer Schlüssel ist.

19. Verfahren nach einem der vorhergehenden Ansprüche, bei dem die in Schritt a) bereitgestellte Identifikation (TO_EVSE1, MAC_EVSE1, IP_EVSE1) oder die intermediäre Adresse eine MAC-Adresse ist.

20. Verfahren nach Anspruch 19, bei dem basierend auf der MAC-Adresse (MAC_EVSE) die entsprechende IP-Adresse der Ladesteuereinheit (CS1) dem Elektrofahrzeug (EV) über die zweite Kommunikationsverbindung (CO2) mittels Neighbor Discovery und/oder Inverse Neighbor Discovery übermittelt wird.

21. Verfahren nach einem der vorhergehenden Ansprüche, bei dem die in Schritt a) bereitgestellte Identifikation (TO_EVSE1, MAC_EVSE1, IP_EVSE1) eine Schlüsselinformation enthält, über welche im Rahmen der Kommunikation zwischen dem Elektrofahrzeug (EV) und der Ladesteuereinheit (CS1) Daten verschlüsselt oder verifiziert werden.

22. System zum Aufbau einer IP-basierten Kommunikationsverbindung, umfassend ein Elektrofahrzeug (EV) und eine Ladestation (EVSE1) mit zugeordneter Ladesteuereinheit (CS1), wobei der Ladesteuereinheit (CS1) eine IP-Adresse (IP_EVSE1) zugewiesen ist, wobei die Ladesteuereinheit (CS1) und die Ladestation (EVSE1) Teil einer Ladeinfrastruktur (CI) sind und an der Ladestation (EVSE1) das Elektrofahrzeug (EV) über ein Ladekabel und/oder eine induktive Ladekopplung zum Laden und/oder Entladen eines Energiespeichers des Elektrofahrzeugs (EV) anschließbar ist, wobei über das Ladekabel und/oder die induktive Ladekopplung eine erste, ausschließlich vom Elektrofahrzeug (EV) und der Ladestation (EVSE1) nutzbare Kommunikationsverbindung (CO1) bereitgestellt wird und wobei das Elektrofahrzeug (EV) mit der Ladesteuereinheit (CS1) und der Ladeinfrastruktur (CI) über eine zweite Kommunikationsverbindung (CO2) kommunizieren kann, welche parallel von anderen Elektrofahrzeugen und Ladesteuereinheiten (CS2) nutzbar ist, wobei das System umfasst:
- ein erstes Mittel, um über die erste Kommunikationsverbindung (CO1) eine Identifikation (TO_EVSE1, MAC_EVSE1, IP_EVSE1) dem Elektrofahrzeug (EV) und der Ladesteuereinheit (CS1) bereitzustellen;
- ein zweites Mittel, um dem Elektrofahrzeug (EV) eine IP-Adresse (IP_EV1) zuzuweisen;
- ein drittes Mittel, um mit Hilfe der dem Elektrofahrzeug (EV) zugewiesenen IP-Adresse (IP_EV) und der über die erste Kommunikationsverbindung (CO1) bereitgestellten Identifikation (TO_EVSE1, MAC_EVSE1, IP_EVSE1) eine IP-basierte Kommunikation zwischen dem Elektrofahrzeug (EV) und der Ladesteuereinheit (CS1) über die zweite Kommunikationsverbindung (CO2) einzurichten.

23. System nach Anspruch 22, welches derart ausgestaltet ist, dass mit dem System ein Verfahren nach einem der Ansprüche 2 bis 21 durchführbar ist.

24. Elektrofahrzeug zur Verwendung in einem System nach Anspruch 22 oder 23, umfassend eine Schnittstelle für die erste Kommunikationsverbindung (CO1) und eine Schnittstelle für die zweite Kommunikationsverbindung (CO2), wobei das Elektrofahrzeug (EV) über die erste und zweite Kommunikationsverbindung (CO1, CO2) derart kommunizieren kann, dass eine IP-basierte Kommunikation zwischen Elektrofahrzeug (EV1) und der Ladesteuereinheit (CS1) über die zweite Kommunikationsverbindung (CO2) eingerichtet wird.

25. Ladestation mit zugeordneter Ladesteuereinheit (CS1) zur Verwendung in einem System nach Anspruch 22 oder 23, umfassend eine Schnittstelle für die erste Kommunikationsverbindung (CO1) und eine Schnittstelle für die zweite Kommunikationsverbindung (CO2), wobei die Ladestation (EVSE1) über die erste und zweite Kommunikationsverbindung (CO1, CO2) derart kommunizieren kann, dass eine IP-basierte Kommunikation zwischen Elektrofahrzeug (EV1) und der Ladesteuereinheit (CS1) über die zweite Kommunikationsverbindung (CO2) eingerichtet wird.

## Claims

1. Method for establishing an IP-based communications connection between an electric vehicle (EV) and a charging control unit (CS1) which is assigned to a charging station (EVSE1) and is allocated an IP address (IP_EVSE1), the charging control unit (CS1) and the charging station (EVSE1) being part of a charging infrastructure (CI), and the electric vehicle (EV) being connected to the charging station (EVSE1) via a charging cable and/or inductive charge coupling for the purpose of charging and/or discharging an energy store of the electric vehicle (EV), a first communications connection (CO1) which can be used solely by the electric vehicle (EV) and the charging station (EVSE1) being provided via the charging cable and/or the inductive charge coupling, and the electric vehicle (EV) being able to communicate with the charging control unit (CS1) and the charging infrastructure (CI) via a second communications connection (CO2) which can be used in a parallel manner by other electric vehicles and charging control units (CS2), in which:
a) the electric vehicle (EV) and the charging control unit (CS1) are provided with an identification (TO_EVSE1, MAC_EVSE1, IP_EVSE1) via the first communications connection (CO1);
b) an IP address (IP_EV) is allocated to the electric vehicle (EV) ;
c) IP-based communication is set up between the electric vehicle (EV) and the charging control unit (CS1) via the second communications connection (CO2) with the aid of the IP address (IP_EV) allocated to the electric vehicle (EV) and the identification (TO_EVSE1, MAC_EVSE1, IP_EVSE1) provided via the first communications connection (CO1).

2. Method according to Claim 1, in which, in step b), the IP address (IP_EV) is allocated to the electric vehicle (EV) by the charging infrastructure (CI) via the second communications connection and is transmitted to the electric vehicle (EV).

3. Method according to Claim 1 or 2, in which the charging control unit (CS1) is integrated in the charging station (EVSE1).

4. Method according to one of the preceding claims, in which the identification (TO_EVSE1, MAC_EVSE1, IP_EVSE1) is provided via the first communications connection (CO1) on the basis of a pulse-width-modulated signal.

5. Method according to one of the preceding claims, in which the first and second communications connections (CO1, CO2) are provided via the same line in the charging cable.

6. Method according to one of the preceding claims, in which the second communications connection (CO2) is a PLC communications connection and, in particular, a PLC communications connection in a current-carrying line of the charging cable or in a line in the charging cable which is used to transmit the identification (TO_EVSE1, MAC_EVSE1, IP_EVSE1) via the first communications connection (CO1) on the basis of a pulse-width-modulated signal.

7. Method according to one of the preceding claims, in which, in step b), the IP address (IP_EV) is allocated to the electric vehicle (EV) using DHCP and/or SLAAC.

8. Method according to one of the preceding claims, in which, in step a), the identification (TO_EVSE1, MAC_EVSE1, IP_EVSE1) is transmitted from the electric vehicle (EV) to the charging control unit (CS1).

9. Method according to Claim 8, in which the electric vehicle (EV) also sends the identification (TO_EVSE1, MAC_EVSE1, IP_EVSE1) transmitted to the charging control unit (CS1) in step a) via the second communications connection (CO2), whereupon the charging control unit (CS1), upon receiving the identification (TO EVSE1, MAC_EVSE1, IP_EVSE1), transmits its IP address (IP_EVSE1) to the electric vehicle (EV), the transmitted IP address (IP_EVSE1) being used to set up IP-based communication.

10. Method according to Claim 8 or 9, in which the charging control unit (CS1) sends the identification (TO_EVSE1, MAC_EVSE1, IP_EVSE1) transmitted to it in step a), together with its IP address (IP_EVSE1), to the electric vehicle (EV) via the second communications connection (CO2), whereupon the electric vehicle (EV) transmits a response to the charging control unit (CS1), the IP address (IP_EVSE1) transmitted to the electric vehicle (EV) being used to set up IP-based communication.

11. Method according to one of the preceding claims, in which, in step a), the identification (TO_EVSE1, MAC_EVSE1, IP_EVSE1) is transmitted from the charging control unit (CS1) to the electric vehicle (EV).

12. Method according to Claim 11, in which the identification (TO_EVSE1, MAC_EVSE1, IP_EVSE1) transmitted to the electric vehicle (EV) in step a) is an IP address (IP_EVSE1) of the charging control unit (CS1) which is used to set up IP-based communication.

13. Method according to Claim 11 or 12, in which a corresponding IP address (IP_EVSE1) of the charging control unit (CS1) is determined on the basis of the identification (TO_EVSE1, MAC_EVSE1, IP_EVSE1) transmitted to the electric vehicle (EV) in step a) and is made available to the electric vehicle (EV), the IP address (IP_EVSE1) provided being used to set up IP-based communication.

14. Method according to Claim 13, in which the electric vehicle (EV) sends the identification (TO_EVSE1, MAC_EVSE1, IP_EVSE1) transmitted to the electric vehicle (EV) in step a) to the charging control unit (CS1) via the second communications connection (CO2), whereupon the charging control unit (CS1) determines the corresponding IP address (IP_EVSE1) from the identification (TO_EVSE1, MAC_EVSE1, IP_EVSE1) and transmits it to the electric vehicle (EV) via the second communications connection (CO2).

15. Method according to Claim 13 or 14, in which the electric vehicle (EV) determines an intermediate address from the identification (TO_EVSE1, MAC_EVSE1, IP_EVSE1) transmitted to the electric vehicle (EV) in step a) and sends it to the charging control unit (CS1) via the second communications connection (CO2), whereupon the charging control unit (CS1) determines the corresponding IP address (IP_EVSE1) from the intermediate address and transmits it to the electric vehicle (EV) via the second communications connection (CO2).

16. Method according to one of Claims 13 to 15, in which the charging control unit (CS1), without being asked, sends a message containing the assignment of the identification (TO_EVSE1, MAC_EVSE1, IP_EVSE1) or an intermediate address, from which the electric vehicle (EV) can derive the identification (TO_EVSE1, MAC_EVSE1, IP_EVSE1), to the corresponding IP address (IP_EVSE1) of the charging control unit (CS1) via the second communications connection (CO2), whereupon the electric vehicle (EV) gathers the IP address (IP_EVSE) from the message.

17. Method according to one of the preceding claims, if dependent on Claim 14, in which, in step a), the electric vehicle (EV) also transmits the identification (TO_EVSE1, MAC_EVSE1, IP_EVSE1) to the charging control unit (CS1), in which case, after the identification (TO_EVSE1, MAC_EVSE1, IP_EVSE1) has been sent to the charging control unit (CS1) by the electric vehicle via the second communications connection (CO2), the charging control unit (CS1) checks whether the identification (TO_EVSE1, MAC_EVSE1, IP_EVSE1) received by it via the second communications connection (CO2) matches the identification (TO_EVSE1, MAC_EVSE1, IP_EVSE1) previously received from the electric vehicle (EV) in step a), in which case the method is continued only in the event of a match.

18. Method according to one of the preceding claims, in which the identification (TO_EVSE1, MAC_EVSE1, IP_EVSE1) provided in step a) or the intermediate address is a token or a URL or a cryptographic key.

19. Method according to one of the preceding claims, in which the identification (TO_EVSE1, MAC_EVSE1, IP_EVSE1) provided in step a) or the intermediate address is a MAC address.

20. Method according to Claim 19, in which the corresponding IP address of the charging control unit (CS1) is transmitted to the electric vehicle (EV) on the basis of the MAC address (MAC_EVSE) via the second communications connection (CO2) using Neighbor Discovery and/or Inverse Neighbor Discovery.

21. Method according to one of the preceding claims, in which the identification (TO_EVSE1, MAC_EVSE1, IP_EVSE1) provided in step a) contains an item of key information which is used to encrypt or verify data during communication between the electric vehicle (EV) and the charging control unit (CS1).

22. System for establishing an IP-based communications connection, comprising an electric vehicle (EV) and a charging station (EVSE1) with an assigned charging control unit (CS1), an IP address (IP_EVSE1) being allocated to the charging control unit (CS1), the charging control unit (CS1) and the charging station (EVSE1) being part of a charging infrastructure (CI), and the electric vehicle (EV) being able to be connected to the charging station (EVSE1) via a charging cable and/or inductive charge coupling for the purpose of charging and/or discharging an energy store of the electric vehicle (EV), a first communications connection (CO1) which can be used solely by the electric vehicle (EV) and the charging station (EVSE1) being provided via the charging cable and/or the inductive charge coupling, and the electric vehicle (EV) being able to communicate with the charging control unit (CS1) and the charging infrastructure (CI) via a second communications connection (CO2) which can be used in a parallel manner by other electric vehicles and charging control units (CS2), the system comprising:
- a first means for providing the electric vehicle (EV) and the charging control unit (CS1) with an identification (TO_EVSE1, MAC_EVSE1, IP_EVSE1) via the first communications connection (CO1);
- a second means for allocating an IP address (IP_EV1) to the electric vehicle (EV);
- a third means for setting up IP-based communication between the electric vehicle (EV) and the charging control unit (CS1) via the second communications connection (CO2) with the aid of the IP address (IP_EV) allocated to the electric vehicle (EV) and the identification (TO_EVSE1, MAC_EVSE1, IP_EVSE1) provided via the first communications connection (CO1).

23. System according to Claim 22, which is configured in such a manner that a method according to one of Claims 2 to 21 can be carried out using the system.

24. Electric vehicle for use in a system according to Claim 22 or 23, comprising an interface for the first communications connection (CO1) and an interface for the second communications connection (CO2), the electric vehicle (EV) being able to communicate via the first and second communications connections (CO1, CO2) in such a manner that IP-based communication is set up between the electric vehicle (EV1) and the charging control unit (CS1) via the second communications connection (CO2).

25. Charging station with an assigned charging control unit (CS1) for use in a system according to Claim 22 or 23, comprising an interface for the first communications connection (CO1) and an interface for the second communications connection (CO2), the charging station (EVSE1) being able to communicate via the first and second communications connections (CO1, CO2) in such a manner that IP-based communication is set up between the electric vehicle (EV1) and the charging control unit (CS1) via the second communications connection (CO2).

## Revendications

1. Procédé pour établir une liaison de communication IP entre un véhicule électrique (EV) et une unité de commande de charge (CS1) qui est associée à une station de charge (EVSE1) et à laquelle est assignée une adresse IP (IP_EVSE1), l'unité de commande de charge (CS1) et la station de charge (EVSE1) faisant partie d'une infrastructure de charge (CI), et le véhicule électrique (EV) étant raccordé à la station de charge (EVSE1) via un câble de charge et/ou un couplage de charge inductif pour charger et/ou décharger un accumulateur d'énergie du véhicule électrique (EV), une première liaison de communication (CO1) exclusivement utilisable par le véhicule électrique (EV) et la station de charge (EVSE1) étant fournie via le câble de charge et/ou le couplage de charge inductif, et le véhicule électrique (EV) pouvant communiquer avec l'unité de commande de charge (CS1) et l'infrastructure de charge (CI) via une deuxième liaison de communication (CO2) qui peut être utilisée parallèlement par d'autres véhicules électriques et unités de commande de charge (CS2), selon lequel :
a) une identification (TO_EVSE1, MAC_EVSE1, IP_EVSE1) est fournie au véhicule électrique (EV) et à l'unité de commande de charge (CS1) via la première liaison de communication (CO1) ;
b) une adresse IP (IP_EV) est assignée au véhicule électrique (EV) ;
c) une communication IP entre le véhicule électrique (EV) et l'unité de commande de charge (CS1) est établie via la deuxième liaison de communication (CO2) à l'aide de l'adresse IP (IP_EV) assignée au véhicule électrique (EV) et de l'identification (TO EVSE1, MAC_EVSE1, IP_EVSE1) fournie via la première liaison de communication (CO1).

2. Procédé selon la revendication 1, selon lequel l'adresse IP (IP_EV), à l'étape b), est assignée au véhicule électrique (EV) via la deuxième liaison de communication par l'infrastructure de charge (CI) et est transmise au véhicule électrique (EV).

3. Procédé selon la revendication 1 ou 2, selon lequel l'unité de commande de charge (CS1) est intégrée à la station de charge (EVSE1).

4. Procédé selon l'une des revendications précédentes, selon lequel l'identification (TO_EVSE1, MAC_EVSE1, IP_EVSE1) est fournie via la première liaison de communication (CO1) sur la base d'un signal modulé en largeur d'impulsion.

5. Procédé selon l'une des revendications précédentes, selon lequel la première et la deuxième liaison de communication (CO1, CO2) sont fournies via la même ligne dans le câble de charge.

6. Procédé selon l'une des revendications précédentes, selon lequel la deuxième liaison de communication (CO2) est une liaison de communication PLC, et plus particulièrement une liaison de communication PLC dans une ligne du câble de charge conductrice de courant ou dans une ligne dans le câble de charge sur laquelle l'identification (TO_EVSE1, MAC_EVSE1, IP_EVSE1) est, sur la base d'un signal modulé en largeur d'impulsion, transmise via la première liaison de communication (CO1).

7. Procédé selon l'une des revendications précédentes, selon lequel l'adresse IP (IP_EV) est, à l'étape b), assignée au véhicule électrique (EV) via DHCP et/ou SLAAC.

8. Procédé selon l'une des revendications précédentes, selon lequel l'identification (TO_EVSE1, MAC_EVSE1, IP_EVSE1) est, à l'étape a), transmise du véhicule électrique (EV) à l'unité de commande de charge (CS1).

9. Procédé selon la revendication 8, selon lequel le véhicule électrique (EV) envoie également via la deuxième liaison de communication (CO2) l'identification (TO_EVSE1, MAC_EVSE1, IP_EVSE1) transmise, à l'étape a), à l'unité de commande de charge (CS1), suite à quoi l'unité de commande de charge (CS1), à la réception de l'identification (TO_EVSE1, MAC_EVSE1, IP_EVSE1), transmet son adresse IP (IP_EVSE1) au véhicule électrique (EV), l'adresse IP (IP_EVSE1) transmise étant utilisée pour établir la communication IP.

10. Procédé selon la revendication 8 ou 9, selon lequel l'unité de commande de charge (CS1) envoie au véhicule électrique (EV), avec son adresse IP (IP_EVSE1), via la deuxième liaison de communication (CO2), l'identification (TO_EVSE1, MAC_EVSE1, IP_EVSE1) qui lui a été transmise à l'étape a), suite à quoi le véhicule électrique (EV) transmet une réponse à l'unité de commande de charge (CS1), l'adresse IP (IP_EVSE1) transmise au véhicule électrique (EV) étant utilisée pour établir la communication IP.

11. Procédé selon l'une des revendications précédentes, selon lequel l'identification (TO_EVSE1, MAC_EVSE1, IP_EVSE1) est, à l'étape a), transmise de l'unité de commande de charge (CS1) au véhicule électrique (EV).

12. Procédé selon la revendication 11, selon lequel l'identification (TO_EVSE1, MAC_EVSE1, IP_EVSE1) transmise au véhicule électrique (EV) à l'étape a) est une adresse IP (IP_EVSE) de l'unité de commande de charge (CS1) qui est utilisée pour établir la communication IP.

13. Procédé selon la revendication 11 ou 12, selon lequel, sur la base de l'identification (TO_EVSE1, MAC_EVSE1, IP_EVSE1) transmise au véhicule électrique (EV) à l'étape a), une adresse IP (IP_EVSE1) correspondante de l'unité de commande de charge (CS1) est déterminée et est fournie au véhicule électrique (EV), l'adresse IP (IP_EVSE1) fournie étant utilisée pour établir la communication IP.

14. Procédé selon la revendication 13, selon lequel le véhicule électrique (EV) envoie à l'unité de commande de charge (CS1), via la deuxième liaison de communication (CO2), l'identification (TO_EVSE1, MAC_EVSE1, IP_EVSE1) transmise au véhicule électrique (EV) à l'étape a), suite à quoi l'unité de commande de charge (CS1) détermine l'adresse IP (IP_EVSE1) correspondante à partir de l'identification (TO_EVSE1, MAC_EVSE1, IP_EVSE1) et la transmet au véhicule électrique (EV) via la deuxième liaison de communication (CO2).

15. Procédé selon la revendication 13 ou 14, selon lequel le véhicule électrique (EV) détermine une adresse intermédiaire à partir de l'identification (TO_EVSE1, MAC_EVSE1, IP_EVSE1) transmise au véhicule électrique (EV) à l'étape a) et l'envoie à l'unité de commande de charge (CS1) via la deuxième liaison de communication (CO2), suite à quoi l'unité de commande de charge (CS1) détermine l'adresse IP (IP_EVSE1) correspondante à partir de l'adresse intermédiaire et la transmet au véhicule électrique (EV) via la deuxième liaison de communication (CO2).

16. Procédé selon l'une des revendications 13 à 15, selon lequel l'unité de commande de charge (CS1) envoie automatiquement, via la deuxième liaison de communication (CO2), à l'adresse IP (IP_EVSE1) correspondante de l'unité de commande de charge (CS1), un message avec l'affectation de l'identification (TO_EVSE1, MAC_EVSE1, IP_EVSE1) ou d'une adresse intermédiaire dont le véhicule électrique (EV) peut déduire l'identification (TO_EVSE1, MAC_EVSE1, IP_EVSE1), suite à quoi le véhicule électrique (EV) extrait l'adresse IP (IP-EVSE) du message.

17. Procédé selon l'une des revendications précédentes, si dépendantes de la revendication 14, selon lequel, à l'étape a), le véhicule électrique (EV) transmet également l'identification (TO_EVSE1, MAC_EVSE1, IP_EVSE1) à l'unité de commande de charge (CS1), l'unité de commande de charge (CS1) vérifiant, après que l'identification (TO_EVSE1, MAC_EVSE1, IP_EVSE1) lui a été envoyée via la deuxième liaison de communication (CO2) par le véhicule électrique, si l'identification (TO_EVSE1, MAC_EVSE1, IP_EVSE1) qu'elle a reçue via la deuxième liaison de communication (CO2) coïncide à l'identification (TO_EVSE1, MAC_EVSE1, IP_EVSE1) reçue préalablement par le véhicule électrique (EV) à l'étape a), le procédé ne se poursuivant qu'en cas de coïncidence.

18. Procédé selon l'une des revendications précédentes, selon lequel l'identification (TO_EVSE1, MAC_EVSE1, IP_EVSE1) fournie à l'étape a) ou l'adresse intermédiaire sont un jeton ou une URL ou une clé cryptographique.

19. Procédé selon l'une des revendications précédentes, selon lequel l'identification (TO_EVSE1, MAC_EVSE1, IP_EVSE1) fournie à l'étape a) ou l'adresse intermédiaire sont une adresse MAC.

20. Procédé selon la revendication 19, selon lequel est transmise au véhicule électrique (EV), sur la base de l'adresse MAC (MAC_EVSE), l'adresse IP correspondante de l'unité de commande de charge (CS1) via la deuxième liaison de communication (CO2) au moyen de Neighbor Discovery et/ou d'Inverse Neighbor Discovery.

21. Procédé selon l'une des revendications précédentes, selon lequel l'identification (TO-EVSE1. MAC_EVSE1, IP_EVSE1) fournie à l'étape a) contient une information de clé permettant, dans le cadre de la communication entre le véhicule électrique (EV) et l'unité de commande de charge (CS1), de crypter ou de vérifier des données.

22. Système permettant d'établir une liaison de communication IP et comprenant un véhicule électrique (EV) et une station de charge (EVSE1) avec une unité de commande de charge (CS1) associée, à l'unité de commande de charge (CS1) étant assignée une adresse IP (IP_EVSE1), l'unité de commande de charge (CS1) et la station de charge (EVSE1) faisant partie d'une infrastructure de charge (CI) et le véhicule électrique (EV) pouvant être raccordé à la station de charge (EVSE1) via un câble de charge et/ou un couplage de charge inductif pour charger et/ou décharger un accumulateur d'énergie du véhicule électrique (EV), une première liaison de communication (CO1) exclusivement utilisable par le véhicule électrique (EV) et la station de charge (EVSE1) étant fournie via le câble de charge et/ou le couplage de charge inductif, et le véhicule électrique (EV) pouvant communiquer avec l'unité de commande de charge (CS1) et l'infrastructure de charge (CI) via une deuxième liaison de communication (CO2) qui peut être utilisée parallèlement par d'autres véhicules électriques et unités de commande de charge (CS2), le système comprenant :
i) un premier moyen pour fournir une identification (TO_EVSE1, MAC_EVSE1, IP_EVSE1) au véhicule électrique (EV) et à l'unité de commande de charge (CS1) via la première liaison de communication (CO1) ;
ii) un deuxième moyen pour assigner une adresse IP (IP_EV1) au véhicule électrique (EV) ;
iii) un troisième moyen pour établir une communication IP entre le véhicule électrique (EV) et l'unité de commande de charge (CS1) via la deuxième liaison de communication (CO2) à l'aide de l'adresse IP (IP_EV) assignée au véhicule électrique (EV) et de l'identification (TO_EVSE1, MAC_EVSE1, IP_EVSE1) fournie via la première liaison de communication (CO1).

23. Système selon la revendication 22, lequel est conçu de manière à permettre l'exécution d'un procédé selon l'une des revendications 2 à 21.

24. Véhicule électrique destiné à être utilisé dans un système selon la revendication 22 ou 23, comprenant une interface pour la première liaison de communication (CO1) et une interface pour la deuxième liaison de communication (CO2), le véhicule électrique (EV) pouvant communiquer de manière telle, via la première et la deuxième liaison de communication (CO1, CO2), qu'une communication IP est établie entre le véhicule électrique (EV1) et l'unité de commande de charge (CS1) via la deuxième liaison de communication (CO2).

25. Station de charge avec unité de commande de charge (CS1) associée, destinée à être utilisée dans un système selon la revendication 22 ou 23, comprenant une interface pour la première liaison de communication (CO1) et une interface pour la deuxième liaison de communication (CO2), la station de charge (EVSE1) pouvant communiquer de manière telle, via la première et la deuxième liaison de communication (CO1, CO2), qu'une communication IP est établie entre le véhicule électrique (EV1) et l'unité de commande de charge (CS1) via la deuxième liaison de communication (CO2).
